# EUROPEAN PATENT SPECIFICATION

(11) **EP 1 092 623 B1**
(45) Date of publication and mention of the grant of the patent: **07.12.2005**
(21) Application number: 00122474.0
(22) Date of filing: 13.10.2000
(51) Int. Cl.: B62M 23/02

(54) **Motor-assisted bicycle**
Fahrrad mit Hilfsmotor
Bicyclette assistée à moteur

(30) Priority: 13.10.1999 JP 29128399
(43) Date of publication of application: 18.04.2001
(73) Proprietor: HONDA GIKEN KOGYO KABUSHIKI KAISHA, Minato-ku, Tokyo (JP)
(72) Inventor: Maruyama, Tomoyuki, 4-1, Chuo 1-chome, Wako-shi, Saitama (JP); Iseno, Mitsuru, 4-1, Chuo 1-chome, Wako-shi, Saitama (JP)
(74) Representative: Liska, Horst

(56) References cited:
- EP-A- 0 800 988
- EP-A- 0 825 101
- DE-U- 29 904 751
- PATENT ABSTRACTS OF JAPAN vol. 1996, no. 11, 29 November 1996 (1996-11-29) & JP 08 175462 A (YAMAHA MOTOR CO LTD), 9 July 1996 (1996-07-09)
- PATENT ABSTRACTS OF JAPAN vol. 1998, no. 14, 31 December 1998 (1998-12-31) & JP 10 250673 A (MORIYAMA KOGYO KK;YAMAHA MOTOR CO LTD), 22 September 1998 (1998-09-22)

## Description

The present invention relates to a motor-assisted bicycle, and particularly to a motor-assisted bicycle having a frame structure allowing a rider to easily get on and off the bicycle.

A motor-assisted bicycle according to the preamble of claim 1 is known from JP 08-175462 A.

A further motor-assisted bicycle having a U-shaped body frame and a motor-driven assist unit positioned under said U-shaped body frame is known from JP 10-250673 A.

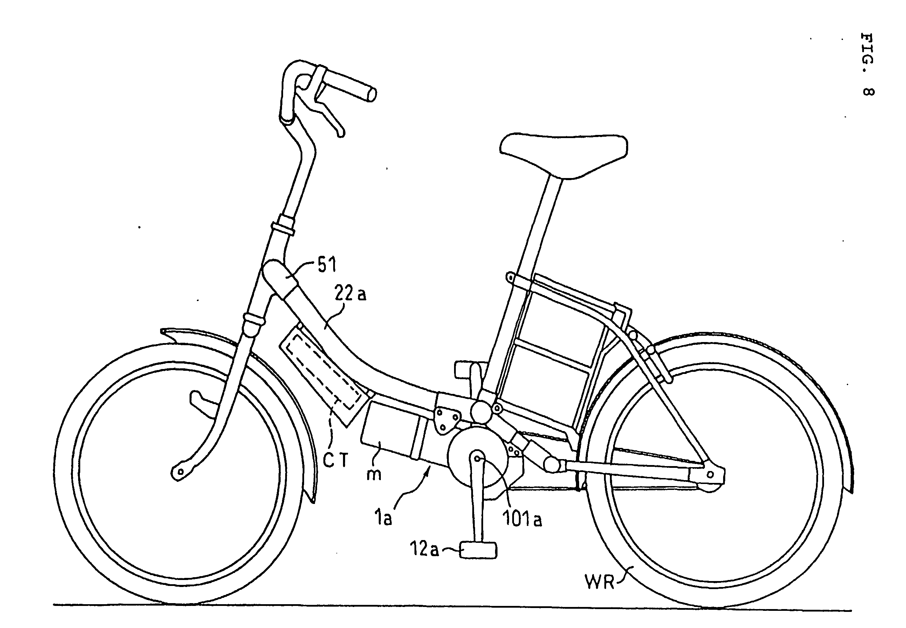

Fig. 8 is a side view showing one example of a motor-assisted bicycle including a drive system using leg-power and a drive system using power of an electric motor. Referring to Fig. 8, a power unit 1a for assisting the drive system using leg-power synthesizes a drive force outputted from an electric motor "m" with a drive force manually inputted from pedals 12a, and transmits the resultant power to a rear wheel WR via a crank shaft 101a. The motor "m" and the power unit 1a are disposed in front of the crank shaft 101a and are suspended from a main tube, that is, a down pipe 22a. A controller CT is also suspended from the down pipe 22a. The motor-assisted bicycle having such a structure has been described, for example, in Japanese Patent Laid-open No. Hei 8-142961.

The above-described prior art bicycle, however, has a problem that since the power unit is suspended from the down pipe and the motor projects forwardly, the height of the down pipe from the ground must be larger, with a result that it is not easy for a rider to stride across the down pipe when the rider gets on and off the bicycle and further the center of gravity of the bicycle is higher. In particular, since the motor having a relatively large weight is located over the crank shaft, the center of gravity is further higher.

An object of the present invention is to provide a motor-assisted bicycle allowing a rider to easily get on and off the bicycle and capable of lowering the center of gravity of the bicycle thereby improving the running stability.

This object is reached by a motor-assisted bicycle according to claim 1.

According to the invention, there is provided a motor-assisted bicycle on which a motor-driven assist unit including a crank shaft and a motor for generating assist-power to be imparted to the crank shaft is mounted, wherein the motor-assisted bicycle includes: a downwardly projecting U-shaped body frame connected to a head pipe for supporting a handlebar; wherein the motor is positioned rearwardly from the crank shaft; and the lowermost position of the U-shaped body frame is positioned forwardly from the motor-driven assist unit and is also positioned under the crank shaft.

With this feature, since the motor is disposed behind the crank shaft and thereby no member projects forwardly from the motor-driven assist unit and further the lowermost portion of the U-shaped body frame is positioned lower than the crank shaft, the position of the obstacle to the rider's motion to get on and off the bicycle becomes lower, with a result that it is easy for the rider to stride across the U-shaped body frame, thereby improving the usability of the bicycle when the rider gets on and off the bicycle.

According to a further feature, the motor is disposed with its shaft kept in parallel to the crank shaft. With this feature, since a portion, projecting rearwardly, of the motor positioned behind the crank shaft is reduced, it is possible to suppress the extension of a wheel base while ensuring the ease of the rider's striding motion across the U-shaped body frame.

According to a further feature, the motor-driven assist unit is connected to the U-shaped body frame, and the connection portion is offset downwardly, forwardly from the crank shaft. With this feature, since the motor-driven assist unit is supported by a lower portion of the vehicular body, it is possible to lower the center of gravity of the bicycle, and make the U-shaped body frame extend to a position being as low as possible and hence to further improve the ease of the rider's striding motion across the U-shaped body frame.

According to a further feature of the present invention, the body frame is formed by connecting a down pipe extending downwardly, rearwardly from the head pipe to a seat post extending upwardly, rearwardly from a portion of the down pipe, the portion being near a lower end of the down pipe and positioned in front of the crank shaft. With this feature, since the body frame can be formed by connecting the two members to each other, the connection position between the two members can be lowered to a point at which the two members are sharply tilted, with a result that it is possible to enhance the ease of the rider's striding motion across the U-shaped body frame and to improve the productivity in production of the body frame as compared with the production of the body frame by bending one member to form a down pipe portion and a seat post portion. Further, since the opening of the U-shaped body frame becomes wider toward the upper side, it is easy for the rider to stride across the U-shaped body frame.

According to a further feature, a battery as a power supply of the motor-driven assist unit is mounted at a position adjacent to the back surface of the seat post. With this feature, since the battery is not present in a space in which the rider strides across the body frame, it is easy for the rider to stride across the body frame, and further since the battery is disposed near the central portion of the body frame, it is possible to keep a good balance of the center of gravity of the bicycle and to facilitate the wiring for supplying a current to the motor-driven assist unit.

According to a further feature, a controller for controlling the motor-driven assist unit is disposed in the motor-driven assist unit at a position offset downwardly, forwardly from the crank shaft. With this feature, since the controller is disposed at a lower position, it is possible not only to further lower the center of gravity of the bicycle in combination of the above-described configurations, but also to realize the layout of the controller by making effective use of a dead space while making the unit as close to the battery as possible thereby lowering the center of gravity as well as concentrating the mass of the bicycle.

According to the invention described in claim 1, since the motor is disposed behind the crank shaft and thereby no member projects forwardly from the motor-driven assist unit and further the lowermost portion of the U-shaped body frame is positioned lower than the crank shaft, the position of the obstacle to the rider's motion to get on and off the bicycle becomes lower, with a result that it is easy for the rider to stride across the U-shaped body frame, thereby improving the usability of the bicycle when the rider gets on and off the bicycle.

Furthermore, since a portion, projecting rearwardly, of the motor positioned behind the crank shaft is reduced, it is possible to suppress the extension of a wheel base while ensuring the ease of the rider's striding motion across the U-shaped body frame.

Furthermore, since the motor-driven assist unit is supported by a lower portion of the vehicular body, it is possible to lower the center of gravity of the bicycle, and make the U-shaped body frame extend to a position being as low as possible and hence to further improve the ease of the rider's striding motion across the U-shaped body frame.

Furthermore, since the body frame can be formed by connecting the two members to each other, the connection position between the two members can be lowered to a point at which the two members are sharply tilted, with a result that it is possible to enhance the ease of the rider's striding motion across the U-shaped body frame and to improve the productivity in production of the body frame as compared with the production of the body frame by bending one member to form a down pipe portion and a seat post portion. Further, since the opening of the U-shaped body frame becomes wider toward the upper side, it is easy for the rider to stride across the U-shaped body frame.

Furthermore, since the battery is not present in a space in which the rider strides across the body frame, it is easy for the rider to stride across the body frame, and further since the battery is disposed near the central portion of the body frame, it is possible to keep a good balance of the center of gravity of the bicycle and to facilitate the wiring for supplying a current to the motor-driven assist unit.

Furthermore, since the controller is disposed at a lower position, it is possible not only to further lower the center of gravity of the bicycle in combination of the above-described configurations, but also to realize the layout of the controller by making effective use of a dead space while making the unit as close to the batter as possible thereby lowering the center of gravity and well as concentrating the mass of the bicycle.

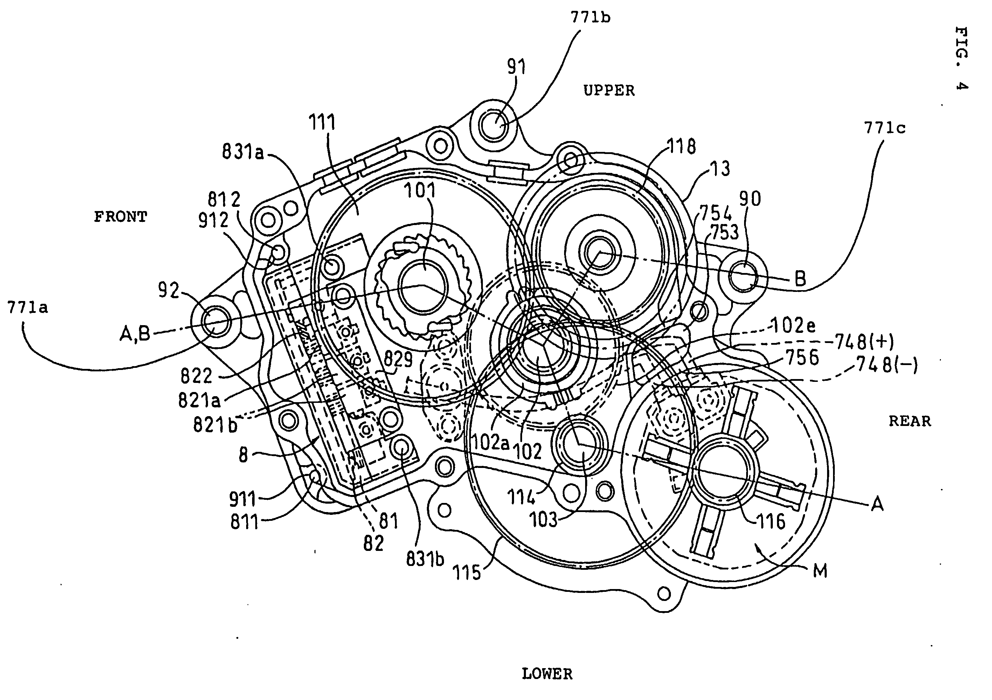

Hereinafter, the present invention will be described in detail with reference to the drawings. It is illustrated in:
Fig. 1:
   A left side view of a motor-assisted bicycle according to one embodiment of the present invention.
Fig. 2:
   A right side view showing an essential portion of the motor-assisted bicycle according to the embodiment of the present invention.
Fig. 3:
   An enlarged view of an essential portion of the motor-assisted bicycle according to the embodiment of the present invention.
Fig. 4:
   A sectional view of a motor-driven assist unit.
Fig. 5:
   A sectional view taken on line A-A of Fig. 4.
Fig. 6:
   A sectional view taken on line B-B of Fig. 4.
Fig. 7:
   A side view showing an essential portion of a body frame.
Fig. 8:
   A left side view of a prior art motor-assisted bicycle.

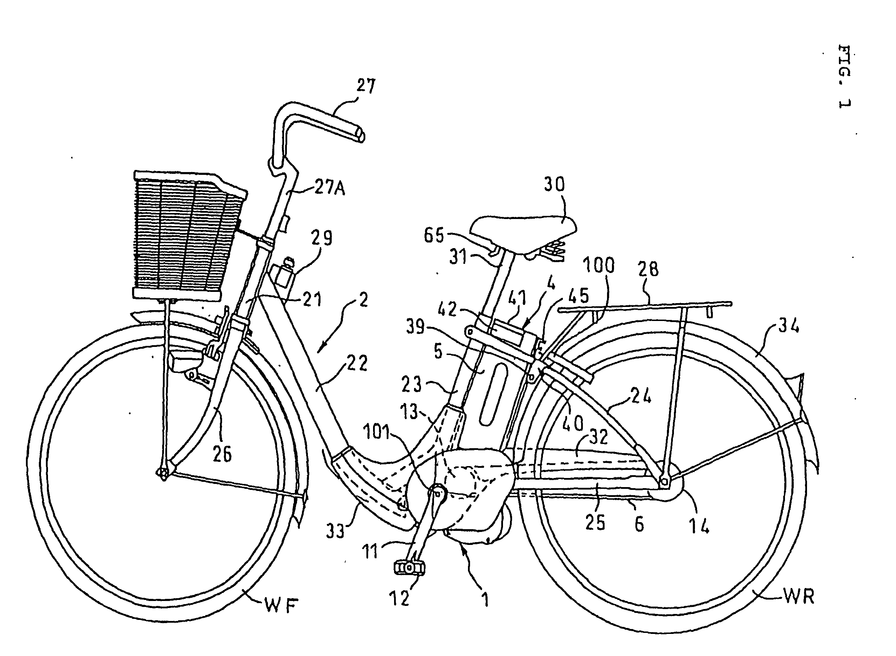

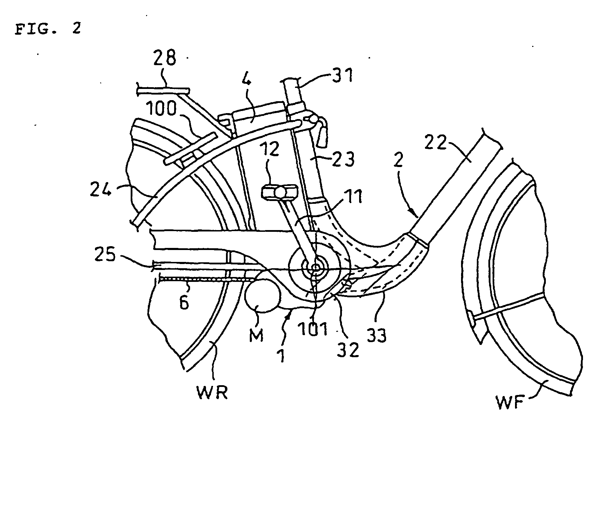

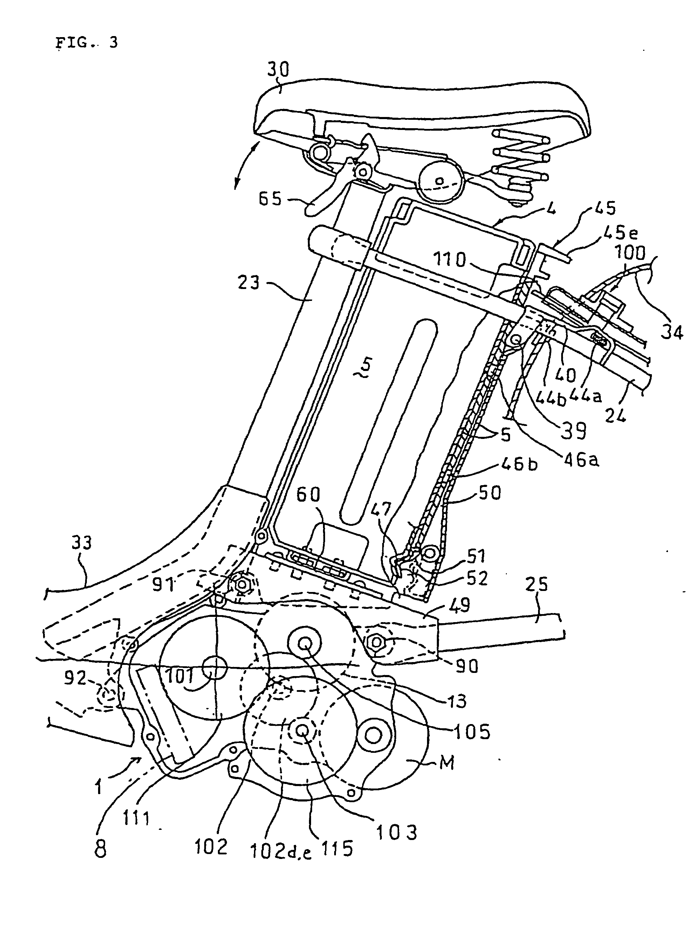

Fig. 1 is a left side view of a motor-assisted bicycle according to one embodiment of the present invention is applied; Fig. 2 is a right side view showing an essential portion of the bicycle shown in Fig. 1; and Fig. 3 is an enlarged view showing an essential portion of the bicycle shown in Fig. 1. Referring to Fig. 1, a body frame 2 of a motor-assisted bicycle according to the present invention includes a head pipe 21 positioned on the front side of a body of the bicycle; a down pipe 22 extending rearwardly, downwardly from the head pipe 21; and a seat post 23 raised upwardly, rearwardly from a portion, near the lower end, of the down pipe 22. The seat post 23 is integrally connected to the down pipe 22, and accordingly, the body frame 2 is formed into a U-shape projecting downwardly as a whole. Since the seat post 23 extends upwardly, rearwardly from the connection portion with the down pipe 22 and the down pipe 22 extends forwardly, upwardly from the connection portion with the seat post 23, a gap between the seat post 23 and the down pipe 22 becomes larger toward the upper side from the connection portion therebetween. As a result, when getting on and off the bicycle, a rider is easy to stride across the U-shaped body frame 2.

The connection portion between the down pipe 22 and the seat post 23 and its neighborhood are covered with a resin cover 33. The resin cover 33, which is divided into upper and lower parts, is removably mounted. A handle post 27A is turnably inserted in the head pipe 21. A handlebar 27 is connected to an upper end of the handle post 27A, and a front fork 26 is connected to a lower end of the handle post 27A. The front fork 26 connected to the handle post 27A is steerable by the handlebar 27. A front wheel WF is rotatably supported by lower ends of the front fork 26.

A motor-driven assist unit 1 including an electric motor for assisting leg-power is provided on a lower portion of the body frame 2. A power supply switch 29 for the motor-driven assist unit 1, which is turned on/off by a power supply key, is provided on a portion, near the head pipe 21, of the down pipe 22. It should be noted that the power supply switch 29 may be provided on the handlebar 27 in front of the handle post 27A.

A crank shaft 101 is rotatably supported by the motor-driven assist unit 1, and pedals 12 are rotatably supported via cranks 11 by right and left ends of the crank shaft 101. A pair of right and left rear lower arms 25 extend rearwardly from the motor-driven assist unit 1, and a rear wheel WR as a drive wheel is rotatably supported between rear ends of the rear lower arms 25. A pair of right and left rear upper arms 24 are provided between an upper portion of the seat post 23 and lower ends of the rear lower arms 25. A seat pipe 31, on an upper end of which a seat 30 is provided, is slidably inserted in the seat post 23, so that the vertical position of the seat 30 can be adjusted by sliding the seat pipe 31 in the seat post 23.

A battery housing case 5 (hereinafter, referred to as "housing case") for housing a battery 4 is mounted on the back side of the seat post 23 at a position under the seat 30. The battery 4, which contains a plurality of battery cells each having a size allowed to be housed in a battery case formed into an approximately rectangular parallelopiped shape, is disposed along the seat post 23 with its longitudinal direction taken nearly in the vertical direction.

A handle 41 with its grip portion positioned on the right side of the vehicular body is mounted on an end portion (upper end in Fig. 1) of the battery 4 in the longitudinal direction. The handle 41 is turnably supported by the battery 4, and is normally withdrawn in a recess provided at a corner of the battery 4. Since a rider generally stands on the left side of the vehicular body, the grip portion of the handle 41 is positioned on the right side of the vehicular body with its rotational shaft (not shown) disposed at a central portion of the vehicular body. With this arrangement, it is easy for the rider to raise the handle 41. Further, to allow the rider to easily check the residual power of the battery 4 from the riding position, a battery residue meter 42 is provided at a position, offset leftwardly from the seat 30, of the battery 4.

Referring to Fig. 3, an operating lever 45 for locking/unlocking the battery 4 and a wheel lock device 100 are disposed behind the battery 4. The operating lever 45 is inserted in a side chamber 50 provided behind the battery housing case. The side chamber 50 has a size longer in the vertical direction and an approximately rectangular shape. An engagement hook 52, which is biased clockwise on a right side view by a torsion spring 51, is provided in a lower portion of the side chamber 50. When the battery 4 is inserted in the housing case 5, the engagement hook 52 is engaged in a recess 47 provided in a lower portion of the battery 4, whereby the battery 4 is fixed in the housing case 5. The recess 47 is formed into an approximately V-shape. Since the lower portion of the battery 4 is fixed by the engagement hook 52, the housing state of the battery 4 is stably kept. That is to say, even if the vehicular body is vibrated, the battery 4 is not moved in both the vertical direction and lateral direction.

The seat 30 provided on the upper portion of the seat post 23 can be turned forwardly, by the unlocking operation of a lever 65, up to a position at which the seat 30 does not interfere with the withdrawal of the battery 4. However, in the state in which the engagement hook 52 is engaged in the recess 47, even if the seat 30 is turned forwardly, the battery 4 cannot be withdrawn upwardly.

The operating lever 45 is usually biased upwardly by a spring (not shown) suspended between the operating lever 45 and a wall of the side chamber 50. In the case of mounting the charged battery 4 to the bicycle, the seat 30 is turned forwardly, and the battery 4 is inserted from above into the housing case 5. When the battery 4 is almost inserted in the housing case 5, the lower end of the battery 4 is brought into contact with a side portion of the engagement hook 52 to push the engagement hook 52 counterclockwise. Then, when the battery 4 is further inserted in the housing case 5, the engagement hook 52 is elastically engaged in the V-shaped recess 47 formed in the battery 4, whereby the battery 4 is fixed in the housing case 5. At the same time, plus (+) and minus (-) output terminals (discharge contacts) provided on the bottom of the battery 4 are electrically, mechanically connected to a contact unit 60 screwed in a battery bracket 49 fixed, typically by welding, to the seat post 23. This connection is stable because of the dead weight of the battery 4 and the pressing by the engagement hook 52.

In the case of removing the battery 4, the operating lever 45 is depressed so that the engagement hook 52 is pushed down by the tip of the operating lever 45. The engagement hook 52 thus pushed down by the tip of the operating lever 45 is turned counterclockwise in the figure against the biasing force of the spring 51. As a result, the engagement hook 52 is escaped from the recess 47. In this way, the engagement of the engagement hook 52 in the recess 47 is released. After the engagement of the engagement hook 52 in the recess 47 is released, the battery 4 can be withdrawn upwardly. The handle 41 can be used for withdrawal of the battery 4.

In the means for locking the battery 4, the turning center of the engagement hook 52 is located rearwardly, upwardly from the recess 47 of the battery 4, and accordingly, when the engagement hook 52 is turned, the battery 4 is pushed down by the engagement hook 52, and more specifically, the upward movement of the battery 4 is restricted by a force applied by the engagement hook 52 in the direction offset obliquely, upwardly from the withdrawal direction of the battery 4. This makes it possible to effectively apply the engagement force to the battery 4 in the withdrawal direction while reducing the rearwardly projecting amount of the engagement means.

An upper portion of the battery housing case 5 is fixed, by means of a screw 39, to a bracket 40 fixed, typically by welding, to the rear upper arm 24. The wheel lock device 100 and a rear fender 34 are also fixed to the bracket 40 by means of screws 44a and 44b, respectively.

A front end of the battery bracket 49 is welded to the seat post 23, and a rear end of the battery bracket 49 is bolted to both a front end of the rear lower arm 25 and a hanger portion 90 of the motor-driven assist unit 1. The motor-driven assist unit 1 has two hanger portions 91 and 92, in addition to the above hanger portion 90. These hanger portions 92, 91 and 90 of the motor-driven assist unit 1 are bolted to a rear end of the down pipe 22, a portion near the front end of the battery bracket 49, and the rear lower arm 25 near the rear end of the battery bracket 49, respectively. In this way, the motor-driven assist unit 1 is fixedly suspended from the body frame 2. It should be noted that since the hanger portion 92 is located under the crank shaft 101 of the motor-driven assist unit 1, the bottom, that is, the lowermost end of the U-shaped body frame 2 can be located under the crank shaft 101.

Since the bottom of the U-shaped body frame 2 is located at the low level as described above, it is possible to improve the ease of the rider's striding motion across the body frame 2. Further, since the motor-driven assist unit 1 is supported at its low level hanger portion 92 by the lower end of the down pipe 22, that is, disposed at a lower level as a whole, it is possible to lower the center of gravity of the motor-driven assist unit 1.

The motor-driven assist unit 1 contains the crank shaft 101, a first idle shaft 102, a second idle shaft 103, an output shaft 105 to which the drive sprocket 13 is connected, and gears 111, 102d, 102e, and 115 for transmitting power between the shafts 101, 102, 103, and 105. The electric motor M having a rotational shaft 104 disposed in parallel to the crank shaft 101 is mounted to the motor-driven assist unit 1. The reason why the rotational shaft 104 of the electric motor M is in parallel to the crank shaft 101 is to reduce a portion, projecting rearwardly from the motor-driven assist unit 1, of the electric motor M. This makes it possible to reduce a gap between the crank shaft 101 and the rear wheel WR and hence to avoid the wheel base from becoming longer.

Leg-power inputted from the crank shaft 101 is acceleratedly transmitted to the first idle shaft 102 and is transmitted from the first idle shaft 102 to the output shaft 105, to rotate the drive sprocket 13. The rotation of the drive sprocket 13 is transmitted to a wheel sprocket 14 of the rear wheel WR (see Fig. 1) via a chain 6. The structure of the motor-driven assist unit 1 will be described in more detail with reference to Figs. 4, 5 and 6.

The battery 4 mounted on the battery bracket 49 located behind the seat post 23 supplies power to the motor M, and the motor M generates assist-power responding to leg-power detected by a leg-power detecting mechanism (to be described later) provided on the first idle shaft 102. The rotation of the motor M is transmitted to the first idle shaft 102 via the second idle shaft 103, and is synthesized with man-power (leg-power) on the first idle shaft 102. The resultant power is then transmitted to the output shaft 105.

As shown in Figs. 1 and 2, the whole of the drive sprocket 13 and an upper half of the chain 6 are covered with a chain cover 32. Since in this bicycle the drive sprocket 13 is not concentric with the crank shaft 101, it is not essential that the chain cover 32 has a circular-arc portion centered on the crank shaft 101; however, in order to obtain a good external appearance, prevent the catch of the rider's leg, protect the motor-driven assist unit 1, and ensure a conventional familiar image of a bicycle, the chain cover 32 is extended in a cylindrical shape centered on the crank shaft 101 up to a position to cover the whole of the drive sprocket 13.

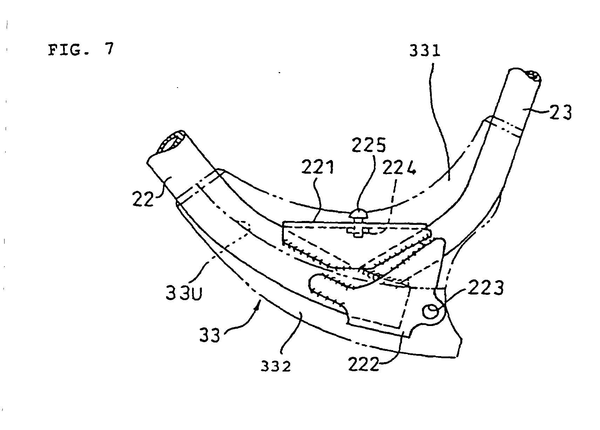

The mounting of the cover 33 on the body frame 2 will be described. Fig. 7 is a side view showing the connection portion (butt portion) between the down pipe 22 and the seat post 23. In this figure, the cover 33 is shown by an imaginary line. Referring to Fig. 7, the down pipe 22 is welded to the seat post 23 at the butt portion therebetween, and a cover mounting bracket 221 is welded to the welded portion. Further, a power unit mounting bracket 222 is welded to an end portion of the down pipe 22. A hole 223 is matched to a bolt of the hanger portion 92. The down pipe 22 is more rigidly connected to the seat post 23 by means of these brackets 221 and 222.

A nut 224 is welded to an upper portion of the bracket 221, and an upper cover 331 is connected to the bracket 221 by means of the nut 224 and a stop screw 225 associated with the nut 224. In this way, the upper cover 331 is mounted to the body frame 2 by connecting the upper cover 331 to the bracket 221 and assembling a lower cover 332 to the upper cover 331.

In the above-described example, the upper cover 331 is fixed to the body frame 2; however, the lower cover 332 may be fixed to the body frame 2 and the upper cover may be deformed to be fixed to the lower cover 332.

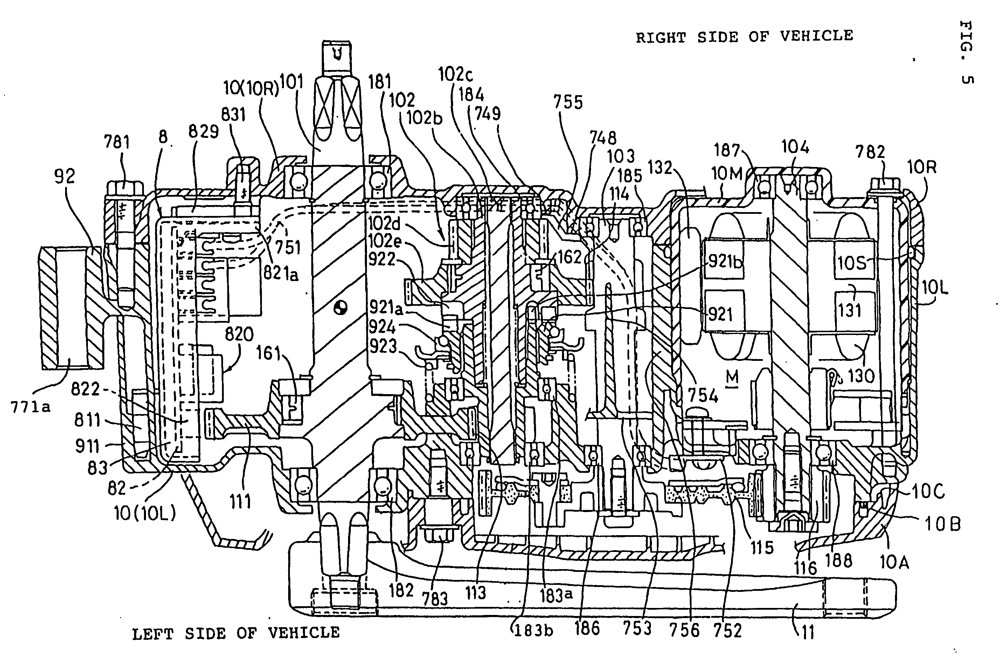

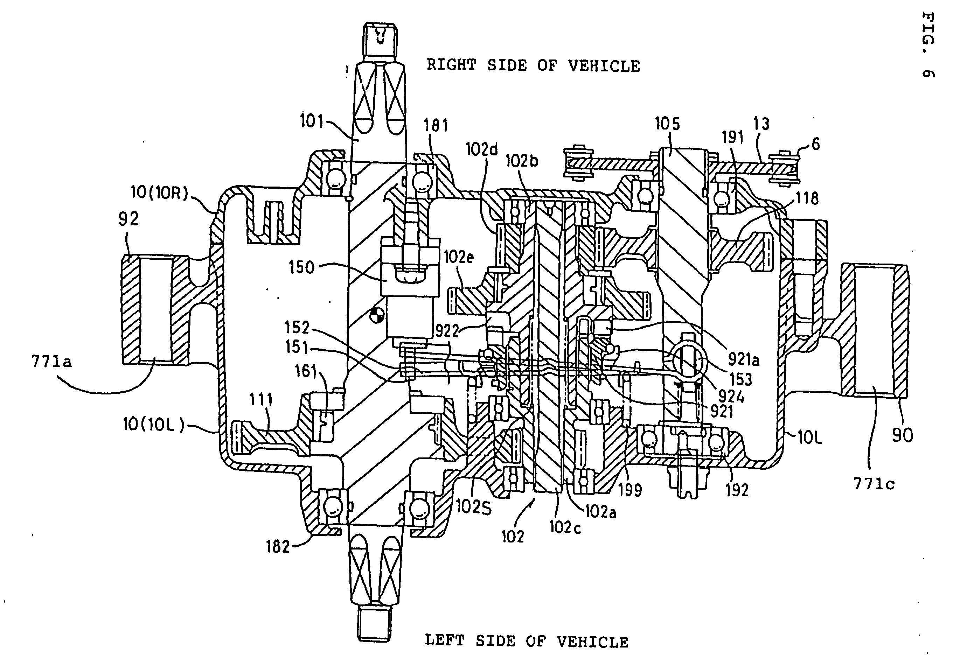

The motor-driven assist unit 1 will be described in more detail below. Fig. 4 is a side view of the motor-driven assist unit 1, with parts partially cutaway; Fig. 5 is a sectional view, taken on line A-A of Fig. 4, showing gear trains; and Fig. 6 is a sectional view, taken on line B-B of Fig. 4, showing gear trains.

Referring to Figs. 4 and 5, a case 10 of the motor-driven assist unit 1 is formed by connecting a left half (left case) 10L and a right half (right case) 10R, each of which is made from aluminum, to each other by means of a plurality of bolts 781.

Since each of bosses 771a, 771b, and 771c of the hanger portions 90, 91 and 92 has no parting plane, the left and right cases 10L and 10R can be separated from each other by removing the bolts 781 while the motor-driven assist unit 1 is left mounted on the body frame 2. To be more specific, the right case 10R can be removed while the left case 10L is left mounted on the body frame 2. As a result, it is possible to easily perform the maintenance of a control unit (controller) 8 and the motor M contained in the case 10 of the motor-driven assist unit 1. In addition, to perform the maintenance of a portion, on the left case 10L side, of the motor M and its drive system, the inside of the motor-driven assist unit 1 may be exposed by removing a cover 10A to be described later.

The crank shaft 101 as a leg-power input shaft is rotatably supported by the case 10 via bearings 181 and 182. A large-diameter acceleration gear 111 is rotatably supported on the crank shaft 101 via a one-way clutch 161, and accordingly, even if the crank shaft 101 is reversely rotated, the acceleration gear 111 is not reversely rotated. The first idle shaft 102 including a leg-power (torque) detecting mechanism is rotatably supported by the case 10 at a position offset rearwardly, downwardly from the crank shaft 101.

The first idle shaft 102 includes hollow-shaped first and second drive shafts 102a and 102b, which are separated from each other on the left and right sides and coaxially disposed in the transverse direction; and a torsion bar 102c passing through the drive shafts 102a and 102b, with both ends thereof spline-connected to the left end of the first drive shaft 102a and the right end of the second drive shaft 102b. A small-diameter gear teeth portion 113 formed on an small-diameter portion of the outer periphery of the first drive shaft 102a is meshed with the acceleration gear 111 of the crank shaft 101. The first drive shaft 102a is rotatably supported by the left case 10L of the case 10 via bearings 183a and 183b, and the second drive shaft 102b is rotatably supported by the right case 10R of the case 10 via a bearing 184.

With this configuration, since leg-power inputted to the crank shaft 101 is accelerated by the acceleration gear 111, the torque of the leg-power is reduced, with a result that torque applied to the torsion bar 102c is reduced. This makes it possible to miniaturize the torsion bar 102c, and hence to make compact the leg-power detecting mechanism as a whole.

A first gear 102d is fixed to a small-diameter portion of the outer periphery of the second drive shaft 102b, and a second gear 102e is inserted on a large-diameter portion of the outer periphery of the second drive shaft 102b via a ratchet 162. The reason why the ratchet 162 is provided is as follows: namely, since the second gear 102e is connected to the motor M via a gear to be described later, it is required to cut off the connection between the first gear 102d and the second gear 102e in order not to apply a reverse rotational force to the motor M when the bicycle runs by man-power while the motor M is stopped.

The mechanism for detection of leg-power will be described below. Additionally, with respect to the leg-power detecting mechanism provided on the first idle shaft 102, positions of components of the mechanism when small-leg power is applied to the mechanism are shown on the right side from the shaft 102 in Fig. 5, and positions of the components of the mechanism when large leg-power is applied to the mechanism are shown on the left side from the shaft 102 in Fig. 5.

A slider 921 is spline-connected to a large-diameter portion of the outer periphery of the first drive shaft 102a. A ball cup 924 is pushed to the second drive shaft 102b side via a washer by a coil spring 923 biased to the right side of the vehicular body. Further, the slider 921 is pushed to the second drive shaft 102b by the ball cup 924 in a state in which the rotation of the slider 921 is absorbed by the ball cup 924. A displacement detecting lever 152 supported by a pivot 153 is in contact with the left side of the washer of the coil spring 923.

An end surface, facing to the first drive shaft 102a side, of a flange provided on an intermediate portion of the second drive shaft 102b has a plurality of (for example, two) cam grooves 922. The depth of the cam groove 922 is continuously changed along the circumferential direction. On the other hand, projecting cam portions 921a to be engaged in the cam grooves 922 are formed on an end surface, facing to the second drive shaft 102b, of the slider 921.

The torsion bar 102c causes a rotational torsion in response to leg-power applied to the crank shaft 101, with a result that a differential phase (positional deviation in the rotational direction) occurs between the first and second drive shafts 102a and 102b. When the contact position between each projecting cam portion 921a and the corresponding recessed groove 922 is changed on the basis of the differential phase, the slider 921 is slid, by the cam effect, leftwardly on the first drive shaft 102a against the elastic force of the coil spring 923, and correspondingly the displacement detecting lever 152 is displaced.

Accordingly, an axial displacement of the displacement detecting lever 152 represents leg-power inputted to the crank shaft 101. The leg-power thus detected as the axial displacement by the leg-power detecting mechanism is converted into an electric signal by a stroke sensor 150 (see Fig. 6), which will be described in detail later, and is transmitted to the control unit 8.

The second idle shaft 103 is rotatably supported by the case 10 via bearings 185 and 186 at a position offset rearwardly, downwardly from the first idle shaft 102. A gear teeth portion 114 to be meshed with the second gear 102e of the second drive shaft 102b is formed on the outer periphery of the second idle shaft 103, and a second intermediate gear 115 is fixed to an end portion of the second idle shaft 103.

The electric motor M is disposed at a position offset rearwardly, downwardly from the second idle shaft 103, and the rotational shaft 104 thereof is rotatably supported by the case 10 via bearings 187 and 188. A motor housing 10M is mounted to the left case 10L by means of a bolt 782. An O-ring 10S is interposed between the motor housing 10M and the left case 10L.

A stator rotor 131 including a motor coil 130 is fixed to the rotational shaft 104 of the motor M, and a magnet 132 is provided around the stator rotor 131. A gear teeth portion 116 to be meshed with the second intermediate gear 115 of the second idle shaft 103 is fixed to one end of the rotational shaft 104. The second intermediate gear 115 may be preferably made from a resin for suppressing gear noise occurring by meshing between the gear 116 rotated at a high speed and the second intermediate gear 115. The cover 10A, which may be preferably made from a resin, is fastened to the left case 10L on the left sides of the gears 115 and 116 by means of a bolt 783, so that the noise reduction effect can be further enhanced.

A water-proof seal 10B is provided along the entire periphery of a connection plane between the cover 10A and the left case 10L, and to further enhance the water-proof, a water-proof rib 10C is provided along the outer periphery of the connection plane between the resin cover 10A and the left case 10L. Accordingly, the water-proof between the cover 10A and the left case 10L can be sufficiently ensured even if the cover 10A is deformed when the cover 10A is fastened to the left case 10L by the bolt 783.

In the case 10, as shown in Fig. 5, a control unit 8 for controlling the motor-driven assist unit 1 is mounted at a position offset forwardly, downwardly from the crank shaft 101. The control unit 8 is configured such that a control circuit board 82 is contained in a resin made dish-like case 81 with a gap portion and the board surface molded with an insulating resin 83. Various control circuits 820, a plurality of power transistors (FETs) 821a, a plurality of diodes 821b, and a rotation sensor 822 are mounted on the control circuit board 82. The FETs and diodes, which cause heat generation upon operation thereof, are fixedly in area-contact with an aluminum made radiation plate 829. The radiation plate 829 is fixedly in area-contact with the right case 10R made from aluminum for enhancing the radiation effect. The rotation sensor 822 is fixed in the vicinity of an end of the control circuit board 82 in such a manner as to face to the outer periphery of the acceleration gear 111 of the crank shaft 101. Accordingly, the heat generated by the heat generating devices 821a and 821b is radiated to the right case 10R, and the rotation sensor 822 disposed in the vicinity of the left case 10L is not affected by the heat generated by the devices 821a and 821b.

Two lead wires 751 for supplying power from the control unit 8 to the motor M is laid out in the case 10 as follows. A partition wall 754 is provided in front of an inner wall portion 756, positioned inside the case 10, of a wall surface of the left case 10L covering the outer periphery of the motor M. A space surrounded by the partition wall 754 and the inner wall portion 756 forms a duct through which the lead wires 751 for connecting the control unit 8 to the motor M are guided.

Motor side terminals 752 of the lead wires 751 are fixed to power supply parts which pass through the left case 10L at positions adjacent to the bearing 188. The lead wires 751 extending from the terminals 752 are introduced from the left case 10L side into the duct 753, and are withdrawn to the right case 10R side. The lead wires 751 thus withdrawn to the right case 10R side extend to the control unit 8 along the inner surface of the right case 10R. A clamp plate 755 is hung between a boss 749 for supporting the bearing 184 and a boss 748 for supporting the bearing 185. The lead wires 751 withdrawn from the duct 753 are certainly guided along the inner surface of the right case 10R while being restricted by the clamp plate 755.

The lead wires 751 can be thus laid out from the motor M to the control unit 8 not by way of a space, on the left case 10L side, which are occupied with the gears 115 and 111, etc., but by way of a relatively free space on the right case 10R side. Further, the passage through which the lead wires 751 pass is clearly separated from the central portion of the case 10 in which the gears are collectively disposed, by the partition wall 754.

In this way, according to this embodiment, since the rotation sensor 822 is provided on the control unit 8 and the control unit 8 is disposed such that the rotation sensor 822 is disposed in the vicinity of the rotor (large-diameter gear 111) rotated in synchronization with the crank shaft 101, it is possible to eliminate the need of additionally providing a space for the rotation sensor 822 and hence to make compact the whole of the motor-assisted system. Further, since a distance between the rotation sensor 822 and the control unit 8 can be reduced, it is possible not only to eliminate the need of provision of a wiring cord therebetween but also to suppress the inclusion of noise in an output signal from the rotation sensor 822.

Since the control unit 8 is disposed at the position offset forwardly, downwardly from the crank shaft 101 in the posture in which the motor-driven assist unit 1 is mounted to the body frame 2, it is possible to enhance an effect of air-cooling the control unit 8 upon running of the bicycle, and hence to improve the cooling efficiency of the control unit 8.

A positioning pin 811 extending in parallel to a bottom surface of the dish-like case 81 projects outwardly from the bottom surface of the dish-like case 81 at a position corresponding to a rotation sensor mounting position of the control board 82, and a position hole 911 in which the position pin 811 is to be inserted is formed in a portion, facing to the positioning pin 811, of the case 10. Similarly, a positioning pin 812 extending in parallel to a side surface of the dish-like case 81 projects outwardly from the side surface of the dish-like case 81 (see Fig. 4), and a positioning hole 912 in which the position pin 812 is to be inserted is formed in a portion, facing to the positioning pin 812, of the case 10. Accordingly, two planes of the control unit 8 can be positioned to keep a clearance between the rotation sensor 822 and the large-diameter gear 111 at a specific value.

The dish-like case 81 of the control unit 8 is positioned relative to the case 10 such that when the positioning pins 811 and 812 first comes into contact with the entrances of the positioning holes 911 and 912, the rotation sensor 822 does not face to the large-diameter acceleration gear 111, and thereafter, when the pins 811 and 812 are started to be inserted in the holes 911 and 912, the relative positional relationship (facing relationship) between the gear teeth portion of the acceleration gear 111 and the rotation sensor 822 becomes a predetermined relationship.

As shown in Fig. 5, the control unit 8 is fixed to the case 10 by fastening both side portions of an end portion, opposed to the end portion on which the rotation sensor 822 and the positioning pin 811 are provided, of the dish-like case 81, to the case 10 by means of screws 831 (831a and 831b, see Fig. 4).

In this way, according to this embodiment, since the positioning pins 811 and 812 as the positioning means are provided on the control unit 8 and the control unit 8 is fixed at the specific position in the motor-driven assist unit 1 with its specific posture kept, it is possible to keep the relative positional relationship between the rotation sensor 822 and the rotor (acceleration gear 111) at the predetermined relation, and hence to ensure the accuracy of detection of the rotational speed of the rotor.

Further, according to this embodiment, since one side portion of the control unit 8 is engaged with the case 10 of the motor-driven assist unit 1 by the positioning means provided on the one side portion of the control unit 8 and the other side portion of the control unit 8 is fastened to the case 10 by the fastening means, it is possible to simplify the fastening structure and to reduce the number of parts.

On the other hand, as shown in Figs. 4 and 6, the output shaft 105 is located at a position offset rearwardly, upwardly from the first idle shaft 102, and is rotatably supported by the case 10 via bearings 191 and 192. A fourth gear 118 meshed with the first gear 102d of the second drive shaft 102b is provided on the output shaft 105, and the drive sprocket 13 is fixed to an end portion, exposed from the case 10, of the output shaft 105.

According to the motor-driven assist unit configured as described above, leg-power as man-power is inputted to the crank shaft 101 via the pedals 12 and the cranks 11, and is transmitted from the first drive shaft 102a to the second drive shaft 102b of the first idle shaft 102 via the acceleration gear 111. On the other hand, rotational torque of the electric motor M is transmitted to the second drive shaft 102b via the gear 115, second idle shaft 103, gear teeth portion 114, and second gear 102e, and is synthesized with the leg-power on the second drive shaft 102b. The resultant power on the second drive shaft 102b is transmitted to the output shaft 105 via the first gear 102d and fourth gear 118, and is further transmitted to the rear wheel WR via the drive sprocket 13 and chain 6.

Here, as shown in Fig. 6, an approximately central portion of a displacement detecting lever 152 with its one end swingably supported by a pin 153 is engaged with the ball cup 924 of the first idle shaft 102, and a stroke detecting shaft 151 of the stroke sensor 150 fixed to the right case 10R is connected to the other end of the displacement detecting lever 152. Accordingly, when a differential phase occurs between the first and second drive shafts 102a and 102b of the first idle shaft 102 in response to leg-power inputted to the crank shaft 101, the ball cup 924 is axially displaced in accordance with the differential phase. The displacement detecting lever 152 is swung by the axial displacement of the ball cup 924, and the swing motion of the lever 152 is transmitted to the stroke sensor 150. In this way, the leg-power inputted to the crank shaft 101 is detected by the stroke sensor 150.

The detected leg-power is converted into an electric signal, which is then supplied to the control unit 8. The control unit 8 determines most suitable assist torque on the basis of a rotational speed of the crank shaft (acceleration gear 111) detected by the rotation sensor 822 and the above-described leg-power, and controls, by the power transistors 821a, a drive current to be supplied to the electric motor M at such a value as to allow the electric motor M to generate the above assist-power.

According to this embodiment, since the leg-power detecting mechanism for converting leg-power inputted to the crank shaft 101 into a mechanical displacement is provided on the first idle shaft 102 adjacent to the crank shaft 101, it is possible to eliminate the need of provision of a space which is required if the leg-power detecting mechanism is provided independently from the first idle shaft 102, and hence to ensure a space required for disposing the control unit 8 in the case 10 of the motor-driven assist unit 1 without enlargement of the case 10 of the motor-driven assist unit 1.

In summary it is an object to provide a motor-assisted bicycle allowing a rider to easily stride across a body frame when getting on and off the bicycle, thereby improving the usability of the bicycle.

To achieve this, a motor-assisted bicycle, on which a motor-driven assist unit 1 including a crank shaft 101 and a motor for generating assist-power to be imparted to the crank shaft 101 is mounted, has a downwardly projecting U-shaped body frame 2 connected to a head pipe 21. The motor is positioned rearwardly from the crank shaft 101; and the bottom of the U-shaped body frame 2 is positioned forwardly from the unit 1 and is also positioned under the crank shaft 101. Since the bottom, that is, the lowermost portion of the U-shaped body frame 2 can be lowered, the position of the obstacle to the rider's motion to get on and off the bicycle becomes lower, with a result that it is easy for the rider to stride across the U-shaped body frame, thereby improving the usability of the bicycle when the rider gets on and off the bicycle.

## Claims

1. A motor-assisted bicycle on which a motor-driven assist unit (1) including a crank shaft (101) and a motor (M) for generating assist-power to be imparted to said crank shaft (101) is mounted,
wherein said motor-assisted bicycle comprises:
a downwardly projecting U-shaped body frame (2) connected to a head pipe (21) for supporting a handlebar (27);
wherein said motor (M) is positioned rearwardly from said crank shaft (101); and
the lowermost position of said U-shaped body frame (2) is positioned forwardly from said motor-driven assist unit (1) and is also positioned below said crank shaft (101),
**characterized in that**
said body frame (2) is formed by connecting a down pipe (22) extending downwardly, rearwardly from said head pipe (21) to a seat post (23) extending upwardly, rearwardly from its connection portion to said down pipe (22), said connection portion being near to and spaced from a free lower end of said down pipe and positioned in front of said crank shaft (101),
wherein said motor-driven assist unit (1) is connected to said free lower end of said down pipe (21).

2. A motor-assisted bicycle according to claim 1, wherein said motor (M) is disposed with its shaft (104) kept in parallel to said crank shaft (101).

3. A motor-assisted bicycle according to claim 1 or 2, wherein said motor-driven assist unit (1) is connected to said U-shaped body frame (2), and said connection portion is offset downwardly, forwardly from said crank shaft (101).

4. A motor-assisted bicycle according to any one of claims 1 to 3, wherein a battery (4) as a power supply of said motor-driven assist unit (1) is mounted at a position adjacent to the back surface of said seat post (23).

5. A motor-assisted bicycle according to any one of claims 1 to 4, wherein a controller (8) for controlling said motor-driven assist unit (1) is disposed in said motor-driven assist unit (1) at a position offset downwardly, forwardly from said crank shaft (101).

## Patentansprüche

1. Motorunterstütztes Fahrrad, an welchem eine motorangetriebene Unterstützungseinheit (1) angebracht ist, welche eine Kurbelwelle (101) und einen Motor (M) zur Erzeugung einer auf die Kurbelwelle (101) auszuübenden Unterstützungskraft enthält,
wobei das motorunterstützte Fahrrad umfasst: einen nach unten vorstehenden U-förmigen Rumpfrahmen (2), welcher mit einem Kopfrohr (21) zur Abstützung eines Lenkers (27) verbunden ist;
wobei der Motor (M) hinter der Kurbelwelle (101) angeordnet ist; und
wobei die unterste Position des U-förmigen Rumpfrahmens (2) vor der motorangetriebenen Unterstützungseinheit (1) angeordnet ist und auch unterhalb der Kurbelwelle (101) angeordnet ist,
**dadurch gekennzeichnet,**
**dass** der Rumpfrahmen (2) ausgebildet ist durch Verbinden eines Unterrohrs (22), welches sich von dem Kopfrohr (21) nach unten und nach hinten erstreckt, mit einer Sattelstütze (23), welche sich von seinem Verbindungsabschnitt mit dem Unterrohr (22) nach oben und nach hinten erstreckt, wobei der Verbindungsabschnitt nahe und beabstandet von einem freien unteren Ende des Unterrohrs ist und vor der Kurbelwelle (101) angeordnet ist,
wobei die motorangetriebene Unterstützungseinheit (1) mit dem freien unteren Ende des Unterrohrs (21) verbunden ist.

2. Motorunterstütztes Fahrrad gemäß Anspruch 1, wobei der Motor (M) so angeordnet ist, dass seine Welle (104) parallel zu der Kurbelwelle (101) gehalten ist.

3. Motorunterstütztes Fahrrad gemäß Anspruch 1 oder 2, wobei die motorangetriebene Unterstützungseinheit (1) mit dem U-förmigen Rumpfrahmen (2) verbunden ist und der Verbindungsabschnitt von der Kurbelwelle (101) nach unten und nach vorne versetzt ist.

4. Motorunterstütztes Fahrrad gemäß einem der Ansprüche 1 bis 3, wobei eine Batterie (4) als eine Energieversorgung der motorangetriebenen Unterstützungseinheit (1) an einer der Rückfläche der Sattelstütze (23) benachbarten Position angebracht ist.

5. Motorunterstütztes Fahrrad gemäß einem der Ansprüche 1 bis 4, wobei eine Steuer/Regeleinheit (8) zur Steuerung/Regelung der motorangetriebenen Unterstützungseinheit (1) in der motorangetriebenen Unterstützungseinheit (1) an einer Position angeordnet ist, welche von der Kurbelwelle (101) nach unten und nach vorne versetzt ist.

## Revendications

1. Bicyclette assistée par moteur sur laquelle est montée une unité d'assistance entraînée par moteur (1) incluant un vilebrequin (101) et un moteur (M) destiné à générer une puissance d'assistance devant être imprimée audit vilebrequin (101),
ladite bicyclette assistée par moteur comportant :
un cadre de corps en forme de U (2) faisant saillie vers le bas raccordé à un tube de tête (21) destiné à supporter un guidon (27),
ledit moteur (M) étant positionné en arrière dudit vilebrequin (101), et
la position la plus inférieure dudit cadre de corps en forme de U (2) étant positionnée en avant de ladite unité d'assistance entraînée par moteur (1), et étant également positionnée en dessous dudit vilebrequin (101),
**caractérisée en ce que**
ledit cadre de corps (2) est formé en raccordant un tube descendant (22) s'étendant vers le bas et vers l'arrière à partir dudit tube de tête (21) à un tube de selle (23) s'étendant vers le haut et vers l'arrière à partir de sa partie de raccord audit tube descendant (22), ladite partie de raccord étant proche d'une extrémité inférieure libre dudit tube descendant, et espacée de celle-ci, et positionnée en avant dudit vilebrequin (101),
ladite unité d'assistance entraînée par moteur (1) étant raccordée à ladite extrémité inférieure libre dudit tube descendant (21).

2. Bicyclette assistée par moteur selon la revendication 1, dans laquelle ledit moteur (M) est disposé en ayant son arbre (104) maintenu parallèle audit vilebrequin (101).

3. Bicyclette assistée par moteur selon la revendication 1 ou 2, dans laquelle ladite unité d'assistance entraînée par moteur (1) est raccordée audit cadre de corps en forme de U (2), et ladite partie de raccord est décalée vers le bas et vers l'avant par rapport audit vilebrequin (101).

4. Bicyclette assistée par moteur selon l'une quelconque des revendications 1 à 3, dans laquelle une batterie (4) servant d'alimentation électrique de ladite unité d'assistance entraînée par moteur (1) est montée dans une position adjacente à la surface arrière dudit tube de selle (23).

5. Bicyclette assistée par moteur selon l'une quelconque des revendications 1 à 4, dans laquelle une commande (8) pour commander ladite unité d'assistance entraînée par moteur (1) est disposée dans ladite unité d'assistance entraînée par moteur (1) dans une position décalée vers le bas et vers l'avant par rapport audit vilebrequin (101).
